# EUROPÄISCHE PATENTSCHRIFT

(11) **EP 3 751 183 B1**
(45) Veröffentlichungstag und Bekanntmachung des Hinweises auf die Patenterteilung: **03.04.2024**
(21) Anmeldenummer: 20167849.7
(22) Anmeldetag: 01.09.2015
(51) Int. Cl.: F16K 37/00, F16K 31/00

(54) **VERFAHREN ZUR ERMITTLUNG DES VERSCHLEISSGRADES EINES VENTILS UND VORRICHTUNG ZUR DURCHFÜHRUNG DES VERFAHRENS**
METHOD FOR DETERMINING THE WEAR LEVEL OF A VALVE AND DEVICE FOR EXECUTING THE METHOD
PROCÉDÉ DE DÉTERMINATION DU DEGRÉ D'USURE D'UNE SOUPAPE ET DISPOSITIF DE MISE EN OEUVRE DUDIT PROCÉDÉ

(30) Priorität: 01.09.2014 DE 102014012688
(43) Veröffentlichungstag der Anmeldung: 16.12.2020
(62) Teilanmeldung aus: 15770808.2
(73) Patentinhaber: Zahlhaas, Werner, 82110 Germering (DE)
(72) Erfinder: ZAHLHAAS, Werner, 82110 Germering (DE); KRAPFL, Markus, 83134 Prutting (DE); THIEL, Stefan, 83022 Rosenheim (DE)
(74) Vertreter: Roos, Peter

(56) Entgegenhaltungen:
- WO-A1-2013/099386
- DE-A1-102011 077 901
- US-A1- 2003 125 841
- US-A1- 2008 264 498

## Beschreibung

Die Erfindung betrifft das Ermitteln eines voraussichtlichen oder bereits tatsächlich eingetretenen Verschleißgrades eines Ventils, beispielsweise eines Mehrwegeventils.

Innerhalb eines Mehrwegeventils befindet sich ein Kolben, der unterschiedliche Positionen einnehmen kann. Je nach Position des Kolbens ändert sich das Verhältnis, wie das Medium durch das Mehrwegeventil fließt. Die Position des Kolbens wird temperaturabhängig verändert durch ein sogenanntes Dehnstoffarbeitselement, das mechanisch mit dem Kolben verbunden ist.

Das Dehnstoffarbeitselement dehnt sich entsprechend einer Temperatur/Bewegungs-Kennlinie bei einer Temperaturerhöhung aus und zieht sich wieder zusammen, wenn die Temperatur sinkt.

Diese temperaturabhängigen Bewegungen führen zu einem Verschleiß.

Innerhalb des Mehrwegventils ist das Dehnstoffarbeitselement das Element, von dessen Verschleißgrad die Funktion des Ventils in besonderem Maße abhängt.

Die Hersteller von Mehrwegeventilen der bekannten Art haben empirisch gewonnene Erfahrungswerte für die Betriebsbedingungen eines Mehrwegeventils und leiten daraus ab, wie lange ein Dehnstoffarbeitselement in einem Mehrwegeventil im Einsatz bleiben kann, bis die Verschleißgrenze des Dehnstoffarbeitselements wahrscheinlich erreicht ist.

Anhand der Einsatzdauer des Mehrwegeventils in einem Kühlkreislauf wird angenommen, dass nach einer gewissen Einsatzdauer der Verschleiß des Dehnstoffarbeitselements mit einer gewissen Wahrscheinlichkeit so weit fortgeschritten ist, dass es im Sinne einer weiteren Betriebssicherheit des Mehrwegeventils und des Systems, in dem sich das Mehrwegeventil befindet, sinnvoll ist, beim Mehrwegeventil jene Komponente auszutauschen, in der das Dehnstoffarbeitselement enthalten ist. Es existieren auch Mehrwegeventile, bei denen man das Dehnstoffarbeitselement einzeln austauschen kann.

Die bekannten Mehrwegeventile haben einen abnehmbaren Deckel. Bei abgenommenem Deckel ist der Austausch der Verschleißteile auf relativ einfache und schnelle Art und Weise möglich.

Mehrwegeventile mit einem Dehnstoffarbeitselement werden in Kühlkreisläufen eingesetzt. In komplexen Kühlkreisläufen sind häufig mehrere solcher Mehrwegeventile vorhanden.

Der tatsächliche Verschleiß der einzelnen Dehnstoffarbeitselemente in den einzelnen Mehrwegeventilen eines Kühlkreislaufes ist in der Praxis oftmals abweichend von den theoretischen Werten für die störungsfreie Einsatzdauer, die von den Herstellern angegeben werden. Bei Wartungsarbeiten an den Kühlkreisläufen ist es schwierig festzustellen, wie der individuelle, tatsächliche Verschleiß des individuellen Dehnstoffarbeitselements im jeweiligen Mehrwegeventil momentan ist. Es ist sowohl ein unterdurchschnittlicher als auch überdurchschnittlicher Verschleiß möglich.

Bei komplexen Kühlkreisläufen gehen die Wartungspläne sicherheitshalber oft von einem überdurchschnittlichen Verschleiß aus und sehen den frühzeitigen Austausch aller Verschleißteile in allen Mehrwegeventilen vor. Dies hat den Nachteil, dass auch bei solchen Mehrwegeventilen Verschleißteile ausgetauscht werden, bei denen die Verschleißteile tatsächlich noch nicht die Verschleißgrenze erreicht haben.

Dennoch kann nachteilig der Fall eintreten, dass die tatsächlichen individuellen Betriebsbedingungen eines Mehrwegeventils zu einem weit überdurchschnittlichen Verschleiß des Dehnstoffarbeitselements führen können oder das Dehnstoffarbeitselement wegen eines verschleißunabhängigen Defektes ausfällt, wodurch wiederum das Mehrwegeventil ausfällt, noch bevor der Zeitpunkt des planmäßig vorgesehenen Austausches gekommen war. Hierdurch können nachteilig überraschende Störungen und/oder Folgeschäden in dem System entstehen, in dem das Mehrwegeventil eingebaut ist.

Das Dehnstoffarbeitselement ist ein Verschleißteil im Inneren des Ventils, dessen tatsächlicher Verschleißgrad während des laufenden Betriebs bisher nicht festgestellt werden kann. Für eine Diagnose des tatsächlichen Verschleißgrades muss das Ventil geöffnet und das Dehnstoffarbeitselement entnommen werden.

Das Öffnen des Ventils, das Entnehmen und Überprüfen des Dehnstoffarbeitselements sind trotz des abnehmbaren Deckels zeit- und arbeitsintensive Arbeiten. Während dieser Arbeiten ist die Funktion des Ventils nicht mehr vorhanden, daher können diese Arbeiten nicht in einem laufenden System erfolgen, was wiederum Kosten durch Stillstand des Systems verursacht.

Aus dem Stand der Technik ist die DE 201 20 609 U1 und korrespondierend hierzu die US 2003/0125841 A1 bekannt. Diese Dokumente beschreiben eine Diagnoseeinrichtung für eine fluidtechnische Einrichtung, beispielsweise eine Ventileinrichtung. Offenbart wird dort einer oder mehrere Sensoren, die dem Ventil zugeordnet sind und Werte liefern. Anhand dieser Werte wird der vermutliche Verschleißgrad des Ventils anhand empirisch ermittelter Vergleichswerte berechnet. Die Berechnung des vermutlichen Verschleißgrades der bekannten fluidtechnischen Einrichtung erfolgt beispielsweise durch eine Zählung von Arbeitszyklen der fluidtechnischen Einrichtung. Die Zählung der Arbeitszyklen allein erlaubt keine ausreichend sichere Aussage über den Verschleiß des Ventils, daher wird vorgeschlagen, noch weitere verschleißrelevante Parameter zu erfassen. Anhand aller erfasster Parameter soll auf statistisch empirischer Basis eine möglichst genaue Aussage über den Verschleiß getroffen werden.

Ein Verfahren nach dem Oberbegriff des Anspruchs 1 ist aus der Veröffentlichung DE 10 2011 077 901 A1 bekannt. Darin wird ein Thermostatventil beschrieben, welches mittels eines Dehnstoffelements in Abhängigkeit von einer Fluidtemperatur betätigbar ist. Das Dehnstoffelement übt hierbei eine Druckkraft auf einen Kolben aus, der auf einen Ventilteller des Ventils einwirkt. Andererseits wird der Ventilteller durch eine Feder belastet. Mittels eines Kraftsensors wird die auf das Dehnstoffelement wirkende Kraft gemessen und hieraus auf die Position des Ventiltellers geschlossen. Ferner können damit Funktionsstörungen (und mithin ein Verschleiß) des Thermostatventils wie ein Festsetzen des Ventiltellers erkannt werden. Außerdem besteht die Möglichkeit, einen Schaden am Thermostatventil zu erkennen, wenn eine vorgegebene Abweichung zwischen einer mittels des Kraftsensors ermittelten Ist-Position des Stellorgans und einer Soll-Position des Stellorgans auftritt, wobei letztere aufgrund der mit einem Temperatursensor gemessenen Temperatur des Fluids mit hinterlegten Kurven ermittelt oder mit gespeicherten Funktionen berechnet wird.

Aus der WO 2013/099386 A1 ist ein Fluidsteuerventil bekannt, bei dem Vibrationen und daraus resultierender Verschleiß durch eine besondere Formgestaltung eines Ventilkörpers und/oder eines Ventilssitzes des Fluidsteuerventils minimiert werden.

Aus der US 2008/0264498 A1 ist ein Ventil bekannt, bei dem mittels einer Sensoreinrichtung eine Stellung eines Ventilkolbens erfasst wird und für eine Vorhersage einer Restlebensdauer des Ventils die Anzahl der komplett vollführten Ventilzyklen gezählt wird.

Es ist Aufgabe der Erfindung, ein neuartiges Verfahren anzugeben, wodurch es möglich ist, den tatsächlichen Verschleiß eines Dehnstoffarbeitselements zu ermitteln, während es sich in einem Mehrwegeventil befindet und ohne das Mehrwegeventil öffnen oder zerlegen zu müssen.

Diese Aufgabe wirdgemäß der Erfindung durch ein Verfahren nach Anspruch 1 gelöst. Vorteilhafte Weiterbildungen der Erfindung ergeben sich aus der nachfolgenden Beschreibung.

Die Erfindung macht sich hierbei die Erkenntnis zu eigen, dass jede Bewegung des Dehnstoffarbeitselements durch eine Änderung der Temperatur des Dehnstoffarbeitselements verursacht ist. Aufgrund der Wärmeleitung verursacht eine Temperaturänderung des durch das Ventil fließenden Fluids oder Mediums auch eine Temperaturänderung des Dehnstoffarbeitselements. Die Schlussfolgerung hieraus ist, dass jede Temperaturänderung des Fluids oder Mediums auch eine Bewegung des Dehnstoffarbeitselements verursacht.

Im Betrieb des Mehrwegeventils ergibt sich aus dem permanenten Aufsummieren des Betrags aller Bewegungen ein fortschreitend aktualisierter Wert für ein Streckenmaß. Der Hersteller des Dehnstoffarbeitselements kann das Streckenmaß bis zum Erreichen der Verschleißgrenze relativ genau angeben.

Wie oben beschrieben verursacht jede Temperaturänderung des Fluids oder Mediums - egal ob die Temperatur ansteigt oder wieder sinkt - eine Bewegung des Dehnstoffarbeitselements um eine gewisse Strecke.

Bei der Erfindung können zur Ermittlung des genauen Streckenmaßes, die ständigen Temperaturwechsel des Dehnstoffarbeitselements und die für das

Dehnstoffarbeitselement gültige Temperatur/Bewegungs-Kennlinie als Datenbasis verwendet werden.

Die für das Dehnstoffarbeitselement gültige Temperatur/Bewegungs-Kennlinie kann eine Hysterese aufweisen und zur Ermittlung des Streckenmaßes kann bei der Erfindung auch der Hystereseverlauf berücksichtigt werden, ob der Temperaturwechsel in aufsteigender oder absteigender Richtung erfolgt.

Zusammen mit der Herstellerangabe, welche Gesamtstrecke garantiert wird, ermöglicht der Vergleich des aktuell ermittelten Streckenmaßes mit der garantierten Gesamtstrecke eine Aussage, wie weit das Dehnstoffarbeitselement von der Verschleißgrenze entfernt ist.

Dies erlaubt es vorteilhaft eine auf aktuellen Messwerten und Berechnungen basierte Aussage über den Verschleiß zu treffen. Das erfindungsgemäße Verfahren ist im Vorteil gegenüber dem bekannten Verfahren, dessen Aussagen über Verschleiß auf Einsatzdauer und empirisch ermittelten Werte basieren.

Ein weiterer Vorteil der Erfindung ist es, individuell die Zeitdauer messen zu können, die vergangen ist, bis ein bestimmtes Streckenmaß erreicht wurde. Dies erlaubt eine vorausschauende Aussage wie schnell die Verschleißgrenze erreicht werden wird.

Wenn dieses Streckenmaß einen bestimmten Schwellenwert überschritten hat, kann ein Signal generiert werden, welches dann zur Planung von Wartungsarbeiten verwendet werden kann.

Je nach Anwendungsgebiet und/oder Einsatzort des Mehrwegeventils kann der Schwellenwert, ab dem ein Signal zur Planung von Wartungsarbeiten generiert wird, individuell festgelegt werden. Beispielweise, wenn sich ein Mehrwegeventil an einem Einsatzort befindet und ein gewisser Zeitaufwand nötig ist, um diesen Einsatzort zu erreichen, kann der Schwellwert entsprechend niedriger gesetzt werden.

Ein weiteres Element der Erfindung ist es, den vermutlichen Verschleißgrad nicht anhand der Summe aller über eine Zeitraum betragsmäßig erfassten Bewegungen anzugeben, sondern aufgrund einer aktuellen Messung, die sofort eine Aussage liefert, wie sich das Dehnstoffarbeitselement aktuell verhält.

Zu dem Dehnstoffarbeitselement gibt es eine gültige Temperatur/Bewegungs-Kennlinie, diese kann einem Datenblatt entnommen werden oder im Rahmen des erfindungsgemäßen Verfahrens durch die Messvorrichtung 8 selbst ermittelt werden.

Durch eine Korrelation des gemessenen Temperaturwertes und der gleichzeitig gemessen Position des Kolbens 2 kann überprüft werden, ob sich das Dehnstoffarbeitselement 3 noch so dehnt und zusammenzieht, wie es der für das Dehnstoffarbeitselement gültigen Temperatur/Bewegungs-Kennlinie entspricht.

Eine Abweichung der gemessenen Position von der Position, die sich aus der Temperatur/Bewegungs-Kennlinie ergeben würde, ist ebenfalls ein Hinweis auf einen Verschleiß. Bei einem schleichenden Verschleiß nimmt die Abweichung im Laufe der Zeit zu.

Damit wird vorteilhaft ein tatsächlich eingetretener Verschleiß erkennbar. Es kann ebenfalls ein Schwellwert definiert werden, welche Abweichung noch tolerierbar ist. Bei einer Abweichung über den tolerierten Wert hinaus kann ein Signal generiert und/oder eine Wartungsarbeit eingeleitet werden.

Die Ermittlung der für ein Dehnstoffarbeitselement gültigen Temperatur/Bewegungs-Kennlinie kann bei der Erfindung für jedes Mehrwegeventil mittels der Sensoren und Auswerteelektronik selbst erfolgen. Dies führt zu noch genaueren Ergebnissen als wenn man eine allgemeine Kennlinie, z.B. aus dem Datenblatt des Herstellers verwendet, da Streuungen ausgeglichen werden können.

Bei der individuellen Kennlinien-Erstellung wird bei einem neuen Mehrwegeventil oder nach dem Austausch des Dehnstoffarbeitselements eine Korrelation zwischen der Temperatur des Dehnstoffarbeitselements und der Position des Kolbens erfasst und für künftige Berechnungen gespeichert. Zu jedem diskreten Temperaturwert wird eine Position gespeichert. Vorzugsweise werden mehrere Datenpaare über den gesamten zu erwartenden Temperaturbereich erfasst und gespeichert.

Um Hysterese-Effekte zu berücksichtigen ist es im Rahmen der Erfindung möglich, diese Datenpaare zu erfassen, wenn die Temperaturänderung zwischen zwei Datenpaaren ansteigende Tendenz hat und nochmals Datenpaare zu erfassen, wenn die Temperaturänderung absteigende Tendenz hat.

Um die Abweichung der aktuellen Kolbenposition von der gültigen Temperatur/Bewegungs-Kennlinie zu beurteilen, wird daher zusätzlich berücksichtigt, ob die Temperaturänderung eine ansteigende oder absteigende Tendenz hat.

Nachfolgend ist ein mögliches Ausführungsbeispiel der Erfindung anhand einer Figur näher erläutert.

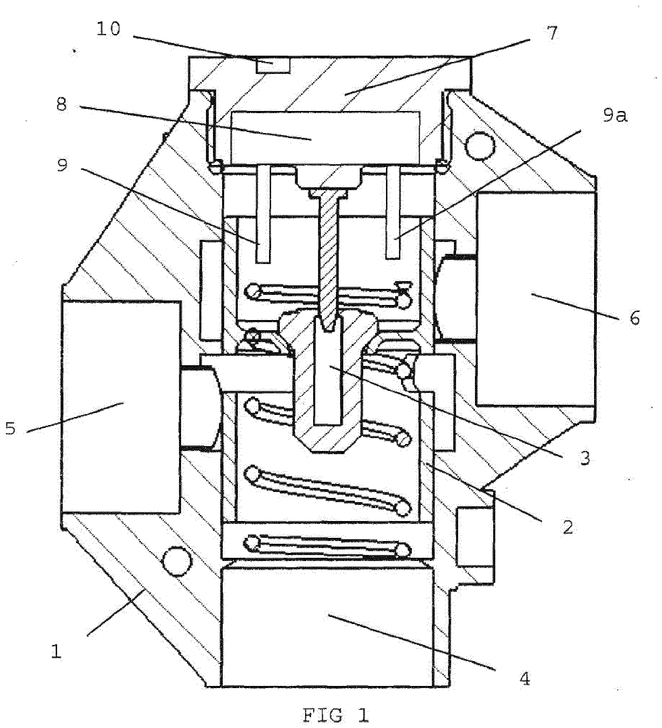

Die Figur 1 zeigt in geschnittener Prinzip-Darstellung das Mehrwegeventil 1.

Im Mehrwegeventil 1 ist ein Kolben 2 angeordnet, der mittels eines Dehnstoffarbeitselementes 3 axial bewegbar ist.

Das Mehrwegeventil 1 hat eine Einlassöffnung 4, in welche ein Medium einströmen kann. Je nach Position des Kolbens 2 kann das Medium durch eine der beiden Auslassöffnungen 5 oder 6 ausströmen. Es gibt auch Positionen des Kolbens 2, bei denen das Medium teils aus der Auslassöffnung 5 und teils aus der Auslassöffnung 6 ausströmen kann.

Das Dehnstoffarbeitselement 3 ist ein Verschleißteil und daher hat das Mehrwegeventil 1 einen Deckel 7, über welchen das Dehnstoffarbeitselement 3 gewechselt werden kann. Der Deckel 7 ist zerstörungsfrei abnehmbar.

In diesem Deckel 7 ist eine Messvorrichtung 8 mit Sensoren 9, 9a, einen Indikator 10 und eventuell auch eine Auswerteelektronik und eventuell eine Energiequelle untergebracht.

Die Unterbringung der Messvorrichtung 8, des Positionssensors 9, des Temperatursensors und eventuell weiterer Komponenten im Deckel 7 hat den Vorteil, dass ein vorhandenes Mehrwegeventil, bei dem zum routinemäßigen Austausch des Dehnstoffarbeitselements der vorhandene Deckel entfernt wird, schnell und einfach mit der Erfindung nachgerüstet werden kann. Zur Nachrüstung wird anstatt des alten Deckels ein neuer Deckel 7 angebracht.

Der Deckel 7 hat an seiner Außenseite optional einen optischen Indikator 10, der den aktuellen Verschleißgrad des Dehnstoffarbeitselements 3 anzeigt. Auch ist es möglich, einen akustischen Indikator 10 im Deckel 7 unterzubringen. Der Indikator 10 kann ein Signal abgeben, wenn die Verschleißgrenze des Dehnstoffarbeitselements 3 oder ein noch vor der eigentlichen Verschleißgrenze liegender Schwellwert überschritten ist. Der Indikator 10 ist besonders vorteilhaft in komplexen Kühlkreisläufen, da bei Wartungsarbeiten schnell optisch oder akustisch erkannt werden kann, ob und wenn ja, welches Mehrwegeventil gewartet werden muss. Auch ist es möglich, dass die Messvorrichtung 8 bei einer Abweichung ein Signal abgibt.

Die Messvorrichtung 8 kann außer dem Positionssensor 9 und dem Temperatursensor weitere Sensoren umfassen, beispielsweise einen zweiten Positionssensor 9a oder Drucksensor umfassen.

Der Positionssensor 9 kann die jeweilige axiale Position des Kolbens 2 erfassen. Als Sensorprinzipien sind sowohl berührungslose Sensorprinzipien möglich, etwa induktive bzw. kapazitive, magnetische Positionsmessung, optische Positionsmessung oder Ultraschall-Positionsmessung. Auch ist es möglich die Position des Kolbens 2 durch mechanische Kopplung mit einem Potentiometer oder Drehkondensator zu realisieren.

Mit den zwei Positionssensoren 9 und 9a ist es zusätzlich zur axialen Positionsbestimmung des Kolbens 2 auch möglich, ein seitliches Spiel des Kolbens 2 zu erfassen. Ein solches seitliches Spiel des Kolbens 2 führt in den beiden Sensoren 9 und 9a zu einer betragsmäßig gleichen, aber hinsichtlich des Vorzeichens unterschiedlichen Änderung des Messwertes. Ein seitliches Spiel des mit dem Dehnstoffarbeitselement 3 verbundenen Kolbens 2 ist ein weiteres Indiz dafür, dass das Dehnstoffarbeitselement 3 einen Verschleiß aufweist.

Der Temperatursensor misst die jeweils aktuelle Temperatur des Mediums im Mehrwegeventil 1. Dieser Temperaturänderung des Mediums folgt mit einer gewissen Verzögerung die Temperatur des Dehnstoffarbeitselements 3, was wiederum zu einer Bewegung des Dehnstoffarbeitselements 3 führt. Bei einer Temperaturerhöhung dehnt sich das Dehnstoffarbeitselement 3 aus, bei einer Temperaturverringerung zieht sich das Dehnstoffarbeitselement 3 zusammen. Der mechanisch mit dem Dehnstoffarbeitselement 3 verbundene Kolben 2 folgt und verändert seine Position entsprechend zur Temperaturänderung.

Anhand einer für das Dehnstoffarbeitselement 3 gültigen Temperatur/Bewegungs-Kennlinie kann allein aus den ständigen Temperaturänderungen des Mediums das Dehnen und Zusammenziehen des Dehnstoffarbeitselements 3 ermittelt werden. Aus der Summe aller Dehn- und Zusammenziehbewegungen kann der Verschleißgrad des Dehnstoffarbeitselements 3 berechnet werden.

Die für das Dehnstoffarbeitselement 3 gültige Temperatur/Bewegungs-Kennlinie kann einem Datenblatt entnommen werden oder im Rahmen der Erfindung durch die Messvorrichtung 8 selbst ermittelt werden. Hierzu wird bei einem neuen Ventil oder nach dem Austausch des Dehnstoffarbeitselements eine Korrelation zwischen Temperatur des Dehnstoffarbeitselements und der Position des Kolbens 2 erfasst und für künftige Berechnungen gespeichert. Zu jedem diskreten Temperaturwert wird eine Position gespeichert. Vorzugsweise werden mehrere Datenpaare über den gesamten zu erwartenden Temperaturbereich erfasst und gespeichert.

Um Hysterese-Effekte zu berücksichtigen ist esim Beispiel vorgesehen, diese Datenpaare zu erfassen, wenn die Temperaturänderung zwischen zwei Datenpaaren ansteigende Tendenz hat und nochmals Datenpaare zu erfassen, wenn die Temperaturänderung absteigende Tendenz hat.

Durch eine Korrelation eines gemessenen Temperaturwertes und der gleichzeitig gemessen Position des Kolbens 2 kann überprüft werden, ob sich das Dehnstoffarbeitselement 3 noch so dehnt und zusammenzieht, wie es der für das Dehnstoffarbeitselement gültigen Temperatur/Bewegungs-Kennlinie entspricht.

Eine Abweichung von der Temperatur/Bewegungs-Kennlinie ist ebenfalls ein Hinweis auf einen Verschleiß. Damit wird vorteilhaft ein Verschleiß erkennbar, der tatsächlich schon eingetreten ist und zwar auch bevor die betragsmäßige Summe aller Änderungen den empirisch ermittelten Wert überschritten hat, ab dem das Signal generiert wird, das üblicherweise zur Planung von Wartungsarbeiten verwendet wird.

Das Mehrwegeventil 1 oder einzelne Teile des Mehrwegeventils 1 können auch aus einem nichtmetallischen Material, etwa Kunststoff oder Keramik sein. Wenn beispielsweise der Kolben 2 aus einem nichtmetallischen Material ist, dann wird ein Messverfahren eingesetzt, welches die Bewegung eines nichtmetallischen Materials detektieren kann, beispielsweise mittels eines kapazitiven Messverfahrens.

Bei einem Mehrwegeventil 1, dessen Gehäuse aus nichtmetallischem Material ist, kann die Messvorrichtung außen am Mehrwegeventil 1 angebracht werden und muss nicht im Deckel 7 untergebracht werden. Das hat den Vorteil, dass die Messvorrichtung bei laufendem Betrieb des Mehrwegeventils nachgerüstet werden kann.

Bei einem Mehrwegeventil aus nichtmetallischem Material kann durch eine geeignete Messvorrichtung auch detektiert werden, ob sich Metallpartikel im Fluid oder Medium befinden.

## Patentansprüche

1. Verfahren zur Ermittlung des Verschleißgrades eines Ventils (1), wobei
- der Verschleißgrad des Ventils (1) vom Verschleißgrad eines innerhalb des Ventils (1) vorhandenen Dehnstoffarbeitselementes (3) abhängt,
- das Dehnstoffarbeitselement (3) mit jeder Temperaturveränderung eine mechanische Bewegung ausführt, die zu einem Verschleiß führt, und
- das Dehnstoffarbeitselement (3) mechanisch mit einem Kolben (2) verbunden ist,
**dadurch gekennzeichnet, dass**
- die Bewegungen des Dehnstoffarbeitselementes (3) errechnet werden, indem zunächst die Temperatur-Veränderung am Dehnstoffarbeitselement (3) erfasst wird,
- anschließend anhand der für das Dehnstoffarbeitselement (3) gültigen Temperatur/Bewegungs-Kennlinie die Temperatur-Veränderungen in Bewegungen umgerechnet werden.

## Claims

1. Method for determining the degree of wear of a valve (1), wherein
- the degree of wear of the valve (1) depends on the degree of wear of an expandable material operating element (3) that is present within the valve (1),
- the expandable material operating element (3) performs a mechanical movement with each change in temperature, which leads to wear, and
- the expandable material operating element (3) is mechanically connected to a piston (2),
**characterized in that**
- the movements of the expandable material operating element (3) are calculated by first detecting the change in temperature at the expandable material operating element (3),
- then converting the changes in temperature into movements on the basis of the temperature/movement characteristic curve which applies to the expandable material operating element (3).

## Revendications

1. Procédé pour déterminer le degré d'usure d'une soupape (1), dans lequel
- le degré d'usure de la soupape (1) dépend du degré d'usure d'un élément fonctionnel en matériau expansible (3) présent à l'intérieur de la soupape (1),
- l'élément fonctionnel en matériau expansible (3) effectue un mouvement mécanique à chaque variation de température, ce qui engendre une usure, et
- l'élément fonctionnel en matériau expansible (3) est relié mécaniquement à un piston (2),
**caractérisé en ce que**
- les mouvements de l'élément fonctionnel en matière expansible (3) sont calculés en détectant tout d'abord la variation de température à l'élément fonctionnel en matière expansible (3),
- ensuite, les variations de température sont converties en mouvements selon la courbe caractéristique température/mouvement applicable à l'élément fonctionnel en matériau expansible (3).
